(19) **Europäisches Patentamt / European Patent Office / Office européen des brevets**

(11) **EP 3 564 865 A1**

(12) **EUROPEAN PATENT APPLICATION**
published in accordance with Art. 153(4) EPC

(43) Date of publication:
06.11.2019 Bulletin 2019/45

(51) Int Cl.:
*G06N 3/063* (2006.01)

(21) Application number: 17875690.4

(22) Date of filing: 28.11.2017

(86) International application number:
PCT/JP2017/042670

(87) International publication number:
WO 2018/101275 (07.06.2018 Gazette 2018/23)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 02.12.2016 JP 2016235383

(71) Applicant: Tokyo Institute of Technology
Tokyo 152-8550 (JP)

(72) Inventors:
• NAKAHARA Hiroki
  Tokyo 152-8550 (JP)
• YONEKAWA Haruyoshi
  Tokyo 152-8550 (JP)

(74) Representative: Dehns
St. Bride's House
10 Salisbury Square
London EC4Y 8JD (GB)

(54) **NEURAL NETWORK CIRCUIT DEVICE, NEURAL NETWORK, NEURAL NETWORK PROCESSING METHOD, AND NEURAL NETWORK EXECUTION PROGRAM**

(57) A binarized neural network circuit (100) includes: an input part (101) configured to allow input of input values x1-xn (xi) (binary) and weights w1-wn (wi); an XNOR gate circuit (102) configured to receive the input values x1-xn and the weights w1-wn and take XNOR logic; a multibit bias W' input part (110) configured to allow input of a multibit bias W'; a sum circuit part (103) configured to sum each of XNOR logical values and the multibit bias W'; and an activation circuit part (120) configured to output only a sign bit of a multibit signal Y generated by using the sum.

**FIG. 9**

EP 3 564 865 A1

**Description**

TECHNICAL FIELD

The present invention relates to a neural network circuit device, a neural network, a neural network processing method, and a neural network execution program.

BACKGROUND ART

Some examples of a conventional Feedforward Neural Network (FFNN) include a RBF (Radial Basis Function) network, a normalized RBF network, and a self-organizing map. The RBF network uses a radial basis function as an activating function used for backpropagation. The RBF network has, however, such problems that: a large number of intermediate layers are not available and recognition determination with high accuracy is difficult and that a scale of hardware is large and a processing takes a long time. The RBF network has been thus applied to limited fields such as handwriting recognition.

In recent years, a convolutional neural network (CNN) (a network which is not fully connected between one layer and another) and a recurrent neural network (bidirectional propagation) have been presented which become focus of attention as new techniques in areas of image recognition for ADAS (advanced driver assistance system), automatic translation, and the like. The CNN is composed of a deep neural network (DNN) to which convolution operation is added.

Patent Document 1 describes a processing part which solves a problem using an input signal and a value of a weight which is obtained by learning between loosely coupled nodes in a hierarchical neural network, based on a check matrix of error correction codes.

An existing CNN is constituted of a multiply-accumulate operation circuit with short precision (multibit) and requires a great number of multiplier circuits. This disadvantageously requires a large area and much power consumption. In view of the described above, a binarized precision, that is, a circuit in which the CNN is composed of only +1 and -1 has been proposed (see, for example, Non-Patent Documents 1 to 4).

RELATED ART DOCUMENTS

PATENT DOCUMENT

Patent Document 1: Japanese Laid-Open Patent Application, Publication No. 2016-173843

NON-PATENT DOCUMENTS

Non-Patent Document 1: M. Courbariaux, I. Hubara, D. Soudry, R.E.Yaniv, Y. Bengio, "Binarized neural networks: Training deep neural networks with weights and activations constrained to +1 or -1," Computer Research Repository (CoRR), "Binary Neural Network Algorithm", [online], March 2016, [searched on Oct. 5, 2016], <URL:http:// arxiv.org/pdf/1602.02830v3.pdf >
Non-Patent Document 2: Mohammad Rastegari, Vicente Ordonez, Joseph Redmon, Ali Farhadi, "XNOR-Net: ImageNet Classification Using Binary Convolutional Neural Networks," Computer Vision and Pattern recognition, "Binary Neural Network Algorithm", [online], March 2016, [searched on Oct. 5, 2016], <URL: https://arxiv.org/pdf/1603.05279v4 >
Non-Patent Document 3: Hiroki Nakahara, Haruyoshi Yonekawa, Tsutomu Sasao, Hisashi Iwamoto and Masato Motomura, "A Memory-Based Realization of a Binarized Deep Convolutional Neural Network," Proc. of the 2016 International Conference on Field-Programmable Technology (FPT), Xi'an, China, Dec 2016 (To Appear).
Non-Patent Document 4: Eriko Nurvitadhi, David Sheffield, Jaewoong Sim, Asit Mishra, Ganesh Venkatesh, Debbie Marr, "Accelerating Binarized Neural Networks: Comparison of FPGA, CPU, GPU, and ASIC," Proc. of the 2016 International Conference on Field-Programmable Technology (FPT), Xi'an, China, Dec 2016 (To Appear).

SUMMARY OF THE INVENTION

PROBLEM TO BE SOLVED BY THE INVENTION

In the techniques disclosed in Non-Patent Documents 1 to 4, reduction in precision into the two values disadvantageously lowers recognition accuracy of the CNN. In order to avoid this and maintain accuracy of the binarized CNN, a batch normalization circuit becomes necessary. The batch normalization circuit is, however, a complicated circuit, and there has been a problem that area and power consumption is increased.

The present invention has been made in light of the background described above and in an attempt to provide a neural network circuit device, a neural network, a neural network processing method, and a neural network execution program, each of which does not require a batch normalization circuit.

MEANS FOR SOLVING THE PROBLEM

A neural network circuit device is provided in a neural network including at least an input layer, one or more intermediate layers, and an output layer. In the neural network circuit device, an input value is multiplied by a weight and a bias in the intermediate layer. The neural network circuit device includes: a logic circuit part configured to receive an input value xi and a weight wi and perform a logical operation; a sum circuit part configured to receive a multibit bias W' and sum an output from the logic circuit part and the multibit bias W'; and an activation circuit part configured to output only a sign bit of a multibit signal Y generated by using the sum.

ADVANTAGEOUS EFFECTS OF THE INVENTION

The present invention can provide a neural network circuit device, a neural network, a neural network processing method, and a neural network execution program, each of which does not require a batch normalization circuit.

BRIEF DESCRIPTION OF THE DRAWINGS

FIG. 1 is a diagram explaining an example of a constitution of a deep neural network (DNN).
FIG. 2 is a diagram explaining an example of a constitution of a neural network circuit in a neural network according to a comparative example.
FIG. 3 is a diagram illustrating an activating function f act(Y) illustrated in the neural network circuit of FIG. 2.
FIG. 4 is a diagram illustrating an example of a constitution of a binarized neural network circuit in which, in place of a multiplier circuit in the neural network circuit illustrated in FIG. 2, an XNOR gate circuit is used.
FIG. 5 is a diagram illustrating an activating function f sgn(B) in the binarized neural network circuit illustrated in FIG. 4.
FIG. 6 is a diagram illustrating an example of a constitution of a binarized neural network circuit having a batch normalization circuit according to another comparative example.
FIG. 7 is a diagram illustrating normalization of a binarized neural network circuit of a neural network, using a scaling (γ).
FIG. 8 is a diagram illustrating a limitation within a range from -1 to +1 of the binarized neural network circuit in the neural network, using a shift (β).
FIG. 9 is a diagram illustrating a constitution of a binarized neural network circuit in a deep neural network according to the embodiment of the present invention.
FIG. 10 is a diagram illustrating an activation circuit of a binarized neural network circuit in a deep neural network according to the embodiment of the present invention.
FIG. 11 is a diagram explaining recognition accuracy of a multibit-constituted neural network circuit and the binarized neural network circuit in the deep neural network according to the embodiment of the present invention.
FIG. 12 is a table showing comparison results between the binarized neural network circuit of the deep neural network according to the embodiment of the present invention and an existing multibit mounting technique.
FIG. 13 is a diagram explaining an example of mounting the binarized neural network circuit in the deep neural network according to the embodiment of the present invention.
FIG. 14 is a diagram illustrating a constitution of a binarized neural network circuit in a deep neural network according to a variation.
FIG. 15 is a diagram illustrating a constitution of a LUT in the binarized neural network circuit according to the variation.

EMBODIMENTS FOR CARRYING OUT THE INVENTION

A deep neural network according to an embodiment for carrying out the present invention (which may be simply referred to as "this embodiment" hereinafter) is described below with reference to related drawings.

(Explanation of Background)

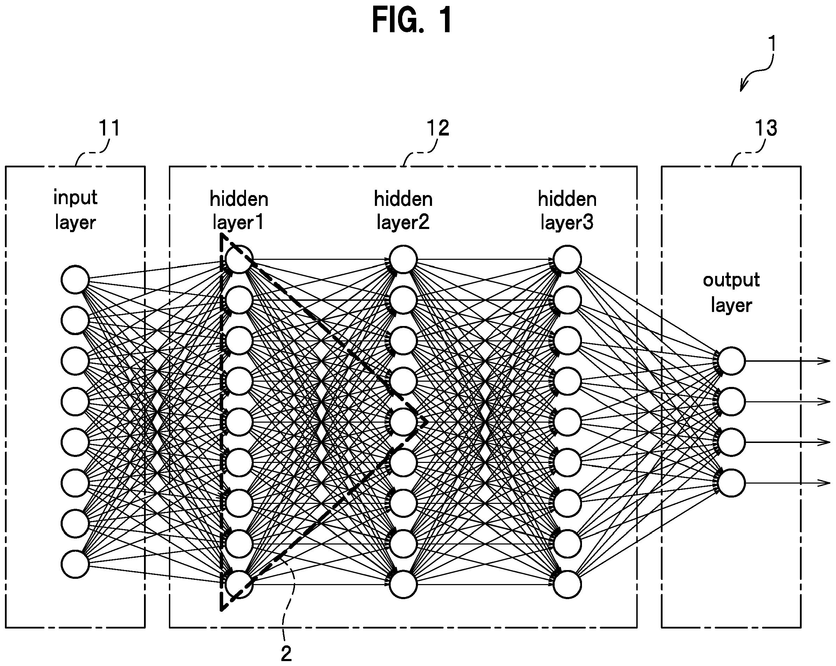

FIG. 1 is a diagram explaining an example of a constitution of a deep neural network (DNN).

As illustrated in FIG. 1, a deep neural network (DNN) 1 includes: an input layer 11; a hidden layer 12 that is an intermediate layer and is provided in any number; and an output layer 13.

The input layer 11 includes a plurality of (illustrated herein as eight) input nodes (neurons). The number of the hidden layers 12 is more than one (illustrated herein as three layers (hidden layer1, hidden layer2, and hidden layer3)). Actually, however, a layer number n of the hidden layers 12 is, for example, as many as 20 to 100. The output layer 13 includes output nodes (neurons) in the number of objects to be identified (illustrated herein as four). Note that each of the number of layers and the number of nodes (neurons) described above is given by way of example only.

In the deep neural network 1, each one of the input layers 11 is connected to each one of the hidden layers 12, and each one of the hidden layers 12 is connected to each one of the output layers 13.

Each of the input layer 11, the hidden layer 12, and the output layer 13 includes any number of nodes (see marks ○ in FIG. 1). The node is a function which receives an input and outputs a value. The input layer 11 also includes a bias node in which a value independent and separate from that of the input node is put. A constitution herein is established by putting one of the layers each including a plurality of nodes, on top of another. In propagation, an input received is weighted and is then converted and outputted to the next layer by using an activating function (an activation function). Some examples of the activating function are a non-linear function such as a sigmoid function and a tanh function, and a ReLU (Rectified Linear Unit function). An increase in the number of nodes makes it possible to increase the number of variables to be treated and to thereby determine a value/boundary, taking a large number of factors into consideration. An increase in the number of layers makes it possible to express a combination of linear boundaries, or a complicated boundary. In learning, an error is calculated, based on which a weight of each layer is adjusted. Learning means solving an optimization problem such that an error becomes minimized. In a method of solving the optimization problem, backpropagation is generally used. A sum of squared error is generally used as an error. A regularization term is added to an error so as to enhance generalization ability. In backpropagation, an error is propagated from the output layer 13, and a weight of each layer is thereby adjusted.

A CNN suitably used for image processing can be established by developing a constitution of the deep neural network 1 of FIG. 1 two-dimensionally. Additionally, by giving feedback to the deep neural network 1, a RNN (Recurrent Neural Network) in which a signal is propagated bidirectionally can be constituted.

As illustrated in a bold dashed triangle in FIG. 1, the deep neural network 1 is constituted by a circuit of achieving a multi-layer neural network (which will be referred to as a neural network circuit hereinafter) 2.

Techniques of the present invention are directed to the neural network circuit 2. How many neural network circuits 2 are applied to where is not specifically limited. For example, when the layer number n of the hidden layers 12 is 20 to 30, the neural network circuit 2 may be applied to any position of any of the layers, and any node may serve as an input node or an output node. The neural network circuit 2 may be used not only in the deep neural network 1 but also in any other neural networks. In outputting a node in the input layer 11 or the output layer 13, however, the neural network circuit 2 is not used because not binary output but multibit output is required. Nevertheless, it does not cause a problem in terms of area, even if the multiplier circuit is left in a circuit constituting the node in the output layer 13.

Note that it is assumed herein that evaluation is performed to input data which has already been subjected to learning. This means that weight wi is already obtained as a result of the learning.

<Neural network circuit>

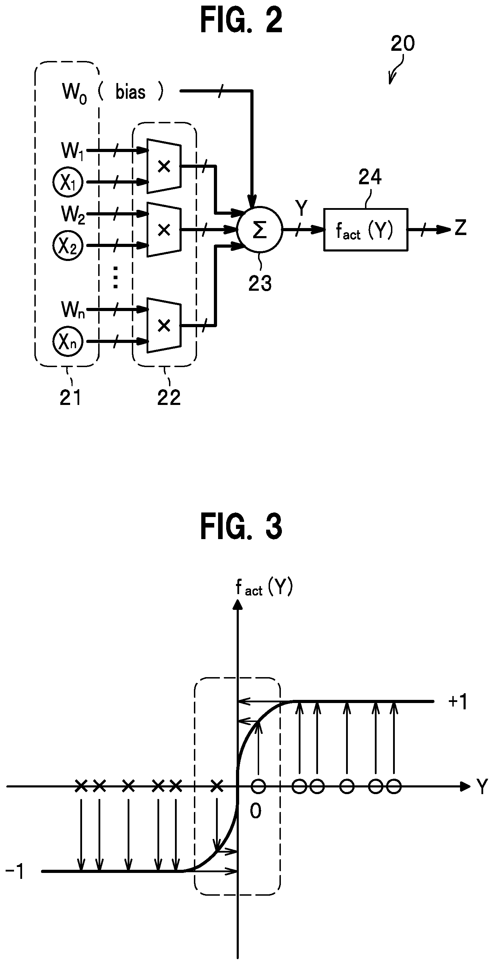

FIG. 2 is a diagram illustrating an example of a constitution of a deep neural network according to a comparative example.

A neural network circuit 20 according to the comparative example can be applied to the neural network circuit 2 constituting the deep neural network 1 of FIG. 1. Note that in each of the related figures to be described hereinafter, when a value is multibit, the value is indicated by a thick solid arrow; and when a value is binary, the value is indicated by a thin solid arrow.

The neural network circuit 20 includes: an input part 21 configured to allow input of an input node which allows input of input values (identification data) X1-Xn (multibit), weights W1-Wn (multibit), and a bias W0 (multibit); a plurality of multiplier circuits 22 each of which is configured to allow input of the input values X1-Xn and the weights W1-Wn and to multiply each one of the input values X1-Xn and each one of the weights W1-Wn; a sum circuit 23 that is configured to sum each of the multiplied values and a bias W0; and an activating function circuit 24 configured to convert a signal Y generated by using the sum, using the activating function f act(Y).

In the structure described above, the neural network circuit 20: receives the input values X1-Xn (multibit); multiplies the weights W1-Wn; and makes the signal Y having been summed inclusive of the bias W0 pass through the activating function circuit 24, to thereby realize a processing simulating that performed by a human neuron.

FIG. 3 is a diagram illustrating the activating function f act(Y) shown in the neural network circuit of FIG. 2. In FIG. 3, the abscissa denotes a signal Y as a sum total, and the ordinate denotes a value of the activating function f act(Y). In FIG. 3, a mark ○ indicates a positive activation value (a state value) within a range of values of ±1; and a mark x, a negative activation value.

The neural network circuit 20 (see FIG. 2) achieves high recognition accuracy with multiple bits. Thus, the non-linear activating function f act(Y) can be used in the activating function circuit 24 (see FIG. 2). That is, as illustrated in FIG. 3, the non-linear activating function f act(Y) can set an activation value that takes a value within a range of ±1, in an area in which a slope is nonzero (see dashed-line encircled portion of FIG. 3). The neural network circuit 20 can therefore realize activation of various types and make recognition accuracy thereof take a practical value. The neural network circuit 20 requires, however, a large number of the multiplier circuits 22. Additionally, the neural network circuit 20 requires a large capacity memory, because an input/output and a weight are multibit, and a reading and writing speed (a memory capacity and a bandwidth) also becomes a problem to be solved.

<Simply-binarized neural network circuit>

The neural network circuit 20 illustrated in the comparative example of FIG. 2 is composed of a multiply-accumulate operation circuit with short precision (multibit). This requires a large number of multiplier circuits 22, which disadvantageously results in a large area and much power consumption. Additionally, the neural network circuit 20 requires a large capacity memory, too, because an input/output and a weight are multibit, and a reading and writing speed (a memory capacity and a bandwidth) also becomes a problem to be solved.

In view of the described above, a binarized precision, that is, a circuit in which the neural network circuit 2 (see FIG. 1) is constituted using only +1 and -1 has been proposed (Non-Patent Documents 1 to 4). More specifically, the multiplier circuit 22 of the neural network circuit 20 illustrated in FIG. 2 is considered to be replaced by a logic gate (for example, an XNOR gate circuit).

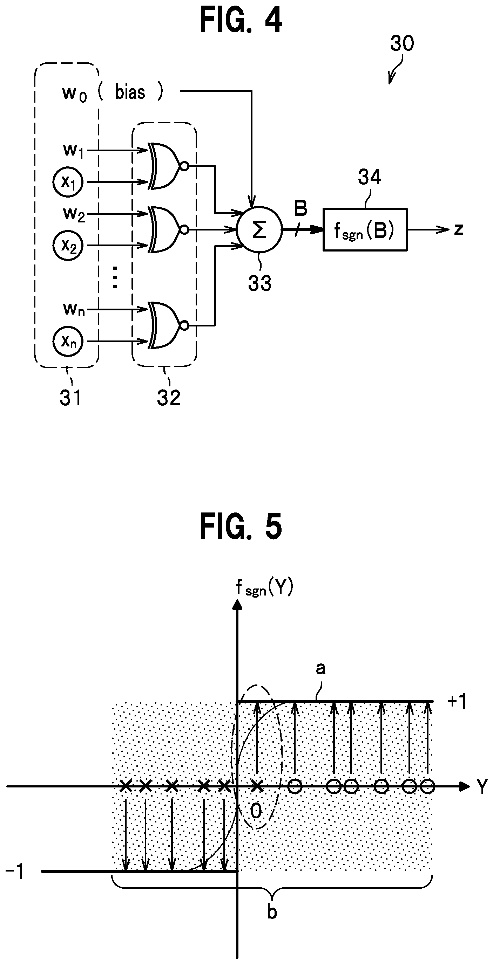

FIG. 4 is a diagram illustrating an example of a structure of a binarized neural network circuit in which, in place of the multiplier circuit 22 in the neural network circuit 20 illustrated in FIG. 2, an XNOR gate circuit is used.

A binarized neural network circuit 30 as a comparative example is applicable to the neural network circuit 2 of FIG. 1.

As illustrated in FIG. 4, the binarized neural network circuit 30 according to the comparative example includes: an input part 31 configured to allow input of an input node which allows input of input values x1-xn (binary), weights w1-wn (binary), and a bias w0 (binary); a plurality of XNOR gate circuits 32 each of which is configured to allow input of the input values x1-xn and the weights w1-wn and to take XNOR (Exclusive NOR) logic; a sum circuit 33 configured to sum each of the XNOR logical values in the XNOR gate circuit 32 and the bias w0; and an activating function circuit 34 configured to convert a signal B obtained by batch-normalizing a signal Y generated by using the sum, using the activating function f sgn(B).

The binarized neural network circuit 30 includes, in place of the multiplier circuit 22 (see FIG. 2), the XNOR gate circuit 32 which realizes the XNOR logic. This makes it possible to reduce an area which is otherwise necessary when the multiplier circuit 22 is structured. Additionally, because all of the input values x1-xn, an output value z, and the weights w1-wn are binary (-1 or +1), an amount of memory can be significantly reduced, compared to a being multivalued, and a memory bandwidth can be improved.

FIG. 5 is a diagram illustrating an activating function f sgn(B) in the above-described binarized neural network circuit 30 illustrated in FIG. 4. In FIG. 5, the abscissas denotes a signal Y generated by taking a sum, and the ordinate denotes a value of the activating function f sgn(B). In FIG. 5, a mark ○ indicates a positive activation value within a range of values of ±1; and a mark x, a negative activation value.

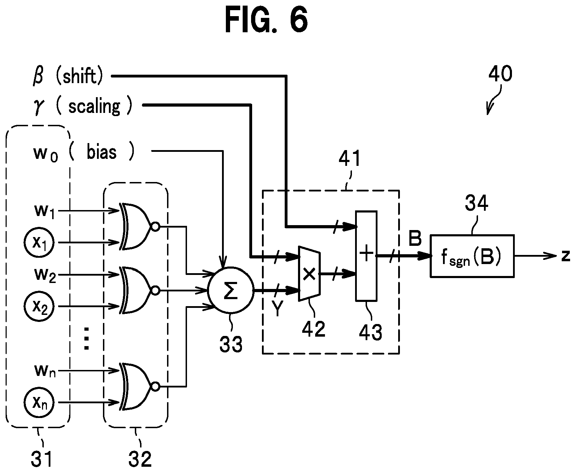

In the binarized neural network circuit 30, the input values x1-xn and the weights w1-wn are simply binarized. Thus, as indicated by sign "a" in FIG. 5, only what can be treated is an activating function which handles only ±1. This may frequently cause errors. Additionally, an area in which a slope is nonzero (see dashed-line encircled portion of FIG. 5) becomes uneven, and learning does not work well. That is, as indicated by sign "b" in FIG. 6, differential cannot be defined due to an uneven width of the area. As a result, recognition accuracy of the simply-binarized neural network circuit 30 is significantly decreased.

In light of the described above, Non-Patent Documents 1 to 4 disclose techniques of performing batch normalization so as to maintain precision of an existing binarized neural network.

<Binarized neural network circuit having batch normalization circuit>

FIG. 6 is a diagram illustrating an example of a constitution of a binarized neural network circuit 40 having a batch normalization circuit which corrects a binarized precision and maintains recognition accuracy of a CNN. In FIG. 6, same reference numerals are given to components same as those in FIG. 4.

As illustrated in FIG. 6, a binarized neural network circuit 40 according to another comparative example includes: the input part 31 configured to allow input of input nodes x1-xn each of which allows input of input values x1-xn (binary), weights w1-wn (binary), and a bias w0 (binary); a plurality of the XNOR gate circuits 32 each of which is configured to allow input of the input values x1-xn and the weights w1-wn and to take XNOR (Exclusive NOR)s logic; the sum circuit 33 configured to sum each of XNOR logical value in the XNOR gate circuit 32 and the bias w0; a batch normalization circuit 41 configured to correct a deviation degree due to binarization, by performing a processing of extending a normalization range and shifting a center of the range; and the activating function circuit 34 configured to convert a signal B obtained by batch-normalizing a signal Y generated by using the sum, using the activating function f sgn(B).

The batch normalization circuit 41 includes: a multiplier circuit 42 configured to perform, after summing the weight, normalization using a scaling ($\gamma$) value (multibit),; and an adder 43 configured to, after normalization using the scaling ($\gamma$) value, make a shift based on the shift ($\beta$) value (multibit) and perform grouping into two. Respective parameters of the scaling ($\gamma$) value and the shift ($\beta$) value are obtained by previously performing learning.

The binarized neural network circuit 40 having the batch normalization circuit 41 makes it possible to correct binarized precision and maintain recognition accuracy of the CNN.

Note that, not just limited to the XNOR gate, any logic gate can be used as long as the logic gate takes XNOR logic of the input values x1-xn and the weights w1-wn.

The batch normalization circuit 41 needs to include, however, the multiplier circuit 42 and the adder 43, as illustrated in FIG. 6. It is also necessary to store a scaling ($\gamma$) value and a shift ($\beta$) value in a memory. Such a memory requires a large-area and is externally provided, which results in a delay in read-out speed.

Unlike the neural network circuit 20 illustrated in FIG. 2, the binarized neural network circuit 40 does not require a large number of the multiplier circuits 22, but requires the large-area multiplier circuit 42 and the adder 43 in the batch normalization circuit 41 thereof. The batch normalization circuit 41 also requires a memory for storing therein a parameter. There is thus a need for reducing area and memory bandwidth.

<Reason why batch normalization circuit is necessary>

Next is described a reason why the batch normalization circuit 41 of the binarized neural network circuit 40 according to another comparative example becomes necessary.

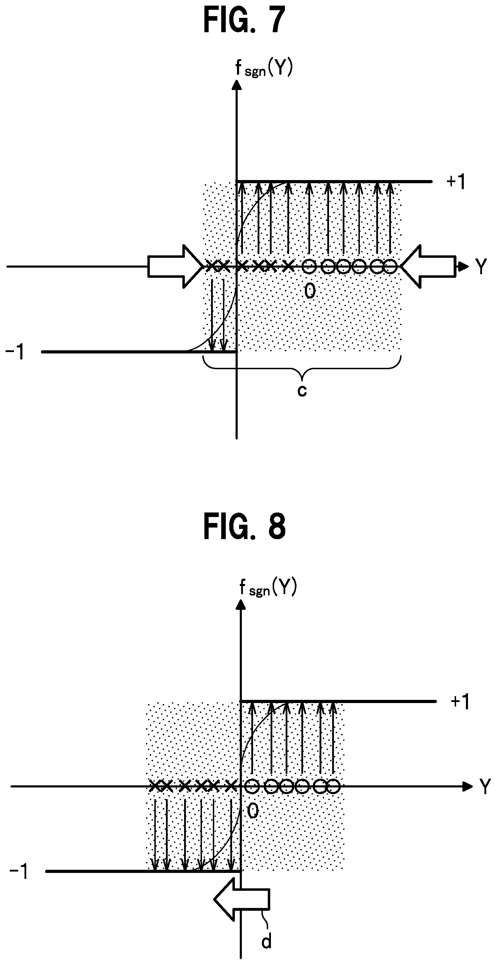

FIG. 7 and FIG. 8 are each a diagram explaining advantageous effects produced by batch normalization in the binarized neural network circuit 40 according to the comparative example. More specifically, FIG. 7 is a diagram illustrating normalization using a scaling ($\gamma$), and FIG. 8 is a diagram illustrating a limitation within a range from -1 to +1, using a shift ($\beta$).

The batch normalization used herein: means a circuit for correcting a deviation degree due to binarization; and, after summing the weight, and normalization using the scaling ($\gamma$) value, is achieved by performing grouping into two by means of appropriate activation based on the shift ($\beta$) value. Those parameters are obtained when previously performing learning. More specific explanation is described below.

As indicated by outlined arrows and sign "c" of FIG. 7, the multiplier circuit 42 (see FIG. 6) of the batch normalization circuit 41 normalizes a (resultant) signal Y after summing the weight, into a width of "2" (see shaded area in FIG. 7), using the scaling ($\gamma$) value. As will be understood compared to a width in FIG. 5 (see shaded area in FIG. 5), the normalization into the width of "2" using the scaling ($\gamma$) value can reduce unevenness of the width. This cannot be achieved in the simply binarized neural network circuit 30 because differential cannot be defined due to the unevenness of the width.

Then, as indicated by outlined arrow and sign "d" in FIG. 8, the adder 43 (see FIG. 6) of the batch normalization circuit 41 constrains a value after normalization using the scaling ($\gamma$) value, to a range from -1 to +1 using the shift ($\beta$) value. That is, as will be understood compared to the width in FIG. 5 (see hatched portion of FIG. 5), when the width in FIG. 5 (see hatched portion of FIG. 5) is shifted more on a +1 side, a value after the normalization using the scaling ($\gamma$) value is limited from -1 to +1 using the shift ($\beta$) value, to thereby set a center of the width to "0". In the example illustrated in FIG. 5, an activation value on a negative side (see mark x in dashed-line encircled portion of FIG. 5) is shifted back to the negative side on which the activation value should be situated originally. This can reduce generation of errors and enhance recognition accuracy.

As described above, the binarized neural network circuit 40 requires the batch normalization circuit 41.

<Problems of binarized neural network circuit having batch normalization circuit>

By introducing the above-described batch normalization circuit 41, recognition accuracy of the binarized neural network circuit 40 becomes subsequently equal to that of the neural network circuit 20 illustrated in FIG. 2. The batch normalization circuit 41 requires, however, the multiplier circuit 42 and the adder 43, and it is necessary to store the multibit scaling ($\gamma$) value and shift ($\beta$) value in a memory. Thus, the binarized neural network circuit 40 is still a complicated circuit, and there is a pressing need for reducing area and power consumption.

In the binarized neural network circuit 20, for example, eight or nine bits are reduced to one bit, and thus, computation precision becomes degraded. When the circuit 20 is applied to a NN, a false recognition rate (a recognition failure rate) increases to 80%, which cannot stand practical use. Therefore, batch normalization is used for dealing with such a problem. The batch normalization circuit 41 requires, however, division, or multiplication and addition of floating points and has much difficulty in being converted and mounted into hardware. The batch normalization circuit 41 also requires an external memory, which causes delay due to access thereto.

(Principle of the Present Invention)

The inventors of the present invention have found that, when a network equivalent to that in which batch normalization operation is introduced is analytically computed, the obtained network requires no batch normalization. In the conventional technology, for example, with regard to the non-linear activating function f act(Y) as illustrated in FIG. 3, when state values indicated by the marks ○ in FIG. 3 are obtained, scaling is performed so as to normalize an uneven width. Each scaling is carried out in order to ensure computation precision when multiple bits are binarized and multiplied. The inventors of the present invention have focused on, however, that essence of binarization in a neural network circuit is just whether to become activated or not (binary). That is, scaling is not necessary and only shift is necessary.

In other words, let Y be a signal which is inputted in the batch normalization circuit 41 (see FIG. 6) in the binarized neural network circuit 40, after summing the weight. Then, a signal outputted from the batch normalization circuit 41 (a signal equivalent to Y) Y' is represented by Formula (1) as follows.

[Formula 1]

$$Y' = \gamma \frac{Y - \mu_B}{\sqrt{\sigma_B^2 + \epsilon}} + \beta$$

$$= \frac{\gamma}{\sqrt{\sigma_B^2 + \epsilon}} \left( Y - \left( \mu_B - \frac{\sqrt{\sigma_B^2 + \epsilon}}{\gamma} \beta \right) \right). \qquad \cdots (1)$$

where

$\gamma$: scaling value
$\beta$: shift value
$\mu B$: average value
$\sigma 2B$: sum of squared error
$\epsilon$: parameter (for adjustment)

Thus, a binarized activating function value f' sgn(Y) is determined by conditions of Formula (2) as follows.
[Formula 2]

$$\cdots (2)$$

$$f'_{sgn}(Y) = \begin{cases} 1 & \left( if\ Y < -\mu_B + \frac{\sqrt{\sigma_B^2 + \epsilon}}{\gamma} \beta \right) \\ -1 & (otherwise) \end{cases}$$

A weighted multiply-accumulate operation can be thus obtained from the analytical operations described above, as represented by Formula (3) as follows.
[Formula 3]

$$Y = \sum_{i=0}^{n} w_i x_i - \mu_B + \frac{\sqrt{\sigma_B^2 + \epsilon}}{\gamma} \beta$$

$$= \sum_{i=1}^{n} w_i x_i + \left( w_0 - \mu_B + \frac{\sqrt{\sigma_B^2 + \epsilon}}{\gamma} \beta \right)$$

$$= \sum_{i=1}^{n} w_i x_i + W' \cdot$$

$$\cdots (3)$$

where W': multibit bias.

After batch normalization learning, an operation in a network equivalent to the batch normalization can be obtained by means of the above-described mathematical computing.

Formula (3) described above shows that only a bias value needs to have a multibit constitution in terms of a circuit. Though the circuit is simple, it is not enough to simply make the bias value multibit for improving recognition accuracy, and the analytic observations described above are indispensable.

[Constitution of Embodiment]

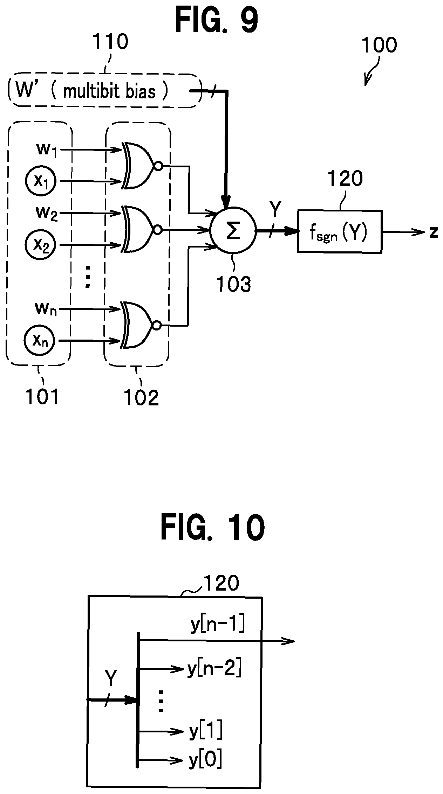

FIG. 9 is a diagram illustrating a structure of a binarized neural network according to the embodiment of the present invention. The binarized neural network circuit according to the embodiment provides techniques of mounting a deep neural network.

A binarized neural network circuit 100 can be applied to the neural network circuit 2 of FIG. 1.

As illustrated in FIG. 9, the binarized neural network circuit 100 (a neural network circuit device) includes: an input part 101 configured to allow input of an input node which allows input of input values x1-xn (xi) (binary), and weights w1-wn (xi) (binary); an XNOR gate circuits 102 (a logic circuit part) configured to receive the input values x1-xn and the weights w1-wn and to take XNOR logic; a multibit bias W' input part 110 configured to allow input of a multibit bias W' (see Formula (3)); a sum circuit 103 (a sum circuit part) configured to sum each of XNOR logical values and the multibit bias W'; and an activation circuit 120 (an activation circuit part) configured to output only a sign bit of a signal Y generated by using the sum.

The input value xi (binary) and the weight wi (binary) are binary signals.

The multibit signal Y and the multibit bias W' are expressed in Formula (3) described above.

The binarized neural network circuit 100 is applied to the hidden layer 12 in the deep neural network 1 (see FIG. 1). It is assumed herein that in the deep neural network 1, evaluation is performed to an input value which has already been subjected to learning. Thus, the multibit bias W' as a weight is already obtained as a result of the learning. The multibit bias W' is a multibit bias value after learning. Note that in the neural network circuit 20 of FIG. 2, the weights W1-Wn and the bias W0, each of which is multibit, are used. In the meantime, the multibit bias W' in this embodiment is different from the multibit bias W0 in the neural network circuit 20 of FIG. 2.

In a network, objects recognized by a client have respective different weights, and each of the objects may have a different weight each time after learning. Meanwhile, in image processing, the same coefficient is always used. In this regard, the network and the image processing have respective hardware significantly different from each other.

The XNOR gate circuit 102 may be any logic circuit part as long as the circuit 102 includes exclusive OR. That is, the XNOR gate circuit 102 is not limited to an XNOR gate and may be any gate circuit as long as the gate circuit takes logic of input values x1-xn and weights w1-wn. For example, a combination of an XOR gate and a NOT gate, a combination of an AND and an OR gate, a gate circuit manufactured by using a transistor switch, or any other logically-equivalent gate circuit may be used.

The activation circuit 120 is a circuit simulating an activating function circuit which outputs only a sign bit of a signal Y generated by using a sum. The sign bit is a binary signal indicating either that the multibit signal Y is activated or not.

As described above, the binarized neural network circuit 100 includes the activation circuit 120 which makes only a bias value to be multibit-constituted and outputs only a sign bit from a sum including the bias value. That is, in the binarized neural network circuit 100, the batch normalization circuit 41 and the activating function circuit 34 in the binarized neural network circuit 40 of FIG. 6 are replaced by the activation circuit 120 which outputs only a sign bit. This eliminates a need for the complicated batch normalization circuit 41 from the binarized neural network circuit 100.

FIG. 10 is a diagram illustrating a binarized neural network circuit in the activation circuit.

As illustrated in FIG. 10, the activation circuit 120 is a circuit which outputs only a sign bit from an output Y generated by using a sum and including a bias value. In the circuit of FIG. 10, when it is assumed that the most significant bit is y[n-1] from among outputs y[0], y[1], ..., y[n-1], only the most significant bit y[n-1] is outputted as the sign bit. The activation circuit 120 outputs only the most significant bit y[n-1] as an output z. Though illustrated as the activating function f sgn(Y) in FIG. 9, the activation circuit 120 does not perform normalization using the scaling (γ) illustrated in FIG. 6 and limitation within a range from -1 to +1 using the shift (β), but the activation circuit 120 outputs only the most significant bit y[n-1].

Next is described how the binarized neural network circuit 100 having the constitution as described above works.

The binarized neural network circuit 100 is used in the neural network circuit 2 in the deep neural network 1 illustrated in FIG. 1. In this case, the input nodes x1-xn in the binarized neural network circuit 100 corresponds to the input nodes in the hidden layer1 in the deep neural network 1 illustrated in FIG. 1. The input part 101 is configured to allow input of the input values x1-xn (binary) of the input nodes in hidden layer1 of the hidden layer 12, and the weights w1-wn (binary).

The XNOR gate circuit 102 receives the input values x1-xn and the weights w1-wn, and performs a binary (-1/+1) multiplication by means of XNOR logic.

In the binarized neural network circuit 100, the multiplier circuit 21 having a multibit constitution (see FIG. 2) is replaced by the XNOR gate circuit 102 which realizes XNOR logic. This makes it possible to reduce an area required for constituting the multiplier circuit 21. Additionally, a memory capacity can be significantly reduced and a memory bandwidth can be improved because both the input values x1-xn and the weights w1-wn are binary (-1/+1), compared to being multibit (multiple valued).

The multibit bias W' in accordance with Formula (3) is then inputted. The multibit bias W' is not the binary bias w0 as in each of the binarized neural network circuits 30, 40 (see FIG. 4 and FIG. 6), and, though being multibit, is different from the bias W0 as in the binarized neural network circuit 20 (see FIG. 2). The multibit bias W' is a bias value after learning which has been batch-normalization adjusted with respect to the above-described bias w0 (binary), as shown in Formula (3).

The sum circuit 103 allows input of the multibit bias W' having a constitution in which only a bias value is made multibit. The sum circuit 103: calculates a total sum of each of XNOR logical values in the XNOR gate circuit 102, and the multibit bias W'; and outputs an output Y (multibit) as the total sum to the activation circuit 120.

As illustrated in FIG. 10, upon receipt of the output Y (multibit) including the bias value as the total sum, the activation circuit 120 outputs only a sign bit. In the circuit illustrated in FIG. 10, the sign bit is y[n-1], the most significant bit, from among the outputs y[0], y[1], ...y[n-1]. The activation circuit 120 outputs only the most significant bit y[n-1] as an output z from among the total sum output Y including the bias value. In other words, the activation circuit 120 does not output values of y[0], y[1], ..., and y[n-2] meaning that (the values of y[0], y[1], ..., y[n-2] are not used).

For example, when a 4-to-5-bit signal is inputted as an input Y into the activation circuit 120, in terms of hardware, the most significant bit is generally taken as the sign bit, and only the most significant bit (the sign bit) is thus outputted. That is, the activation circuit 120 outputs either being activated or not (binary, that is, either +1 or -1), which is transmitted to a node in an intermediate layer (a hidden layer) at a later stage.

The binarized neural network circuit 100 is, as represented in Formula (3), equivalent to a network in which batch normalization manipulation is introduced. Formula (3) is realized as follows. An input value xi having been made to a binarized value (only one bit), a weight wi, and a multibit bias W' are used as inputs. After taking XNOR logic which is used in place of multiplication, a total sum of the described above including a bias value (the first term of Formula (3) described above), the activation circuit 120 outputs only a sign bit from the output Y including the bias value as the total sum (the second term of Formula (3)).

Therefore, though the activation circuit 120 is a circuit which outputs only the sign bit from the output Y including the bias value as the total sum, from a functional perspective, the activation circuit 120 is a circuit which has a function similar to that of the activating function circuit f sgn(Y), that is, a circuit simulating the activating function circuit f sgn(Y).

In order to confirm advantageous effects of this embodiment, a VGG16 (having 16 hidden layers) benchmark network is mounted. The VGG16 is a benchmark which is commonly used and is reproducible.

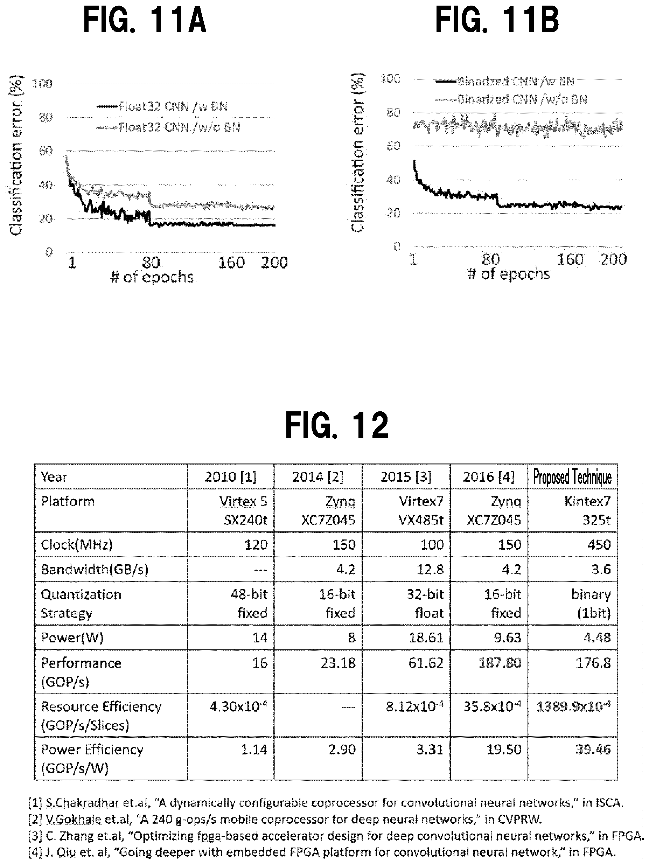

FIGS. 11A and 11B are diagrams explaining recognition accuracy of a multibit-constituted neural network circuit and a binarized neural network circuit, respectively. FIG. 11A illustrates recognition accuracy of the neural network circuit 20 (see FIG. 2) having a multibit (32-bit floating point) constitution. FIG. 11B illustrates recognition accuracy of the binarized neural network circuit 100. In each of FIGS. 11A and 11B, the abscissa denotes the number of epochs which is the number of cycles updated with respect to learning data used, and the ordinate denotes false recognition (error) (classification error). FIGS. 11A and 11B each illustrate this embodiment by mounting and confirming by the VGG16 benchmark network. In FIG. 11A, a float32 CNN of a framework software Chainer (registered trademark) for deep neural network is used. In FIG. 11B, a float32 CNN of framework software Chainer (registered trademark) for deep neural network is used. Each of FIGS. 11A and 11B also shows a case with batch normalization and a case without batch normalization.

As illustrated in FIG. 11A, the multibit-constituted neural network circuit 20 is low in errors (classification errors) and high in recognition accuracy. While compared to recognition accuracy of the multibit-constituted neural network circuit 20, recognition accuracy of a binarized neural network circuit is discussed below.

As shown as "without batch normalization" in FIG. 11B, the simply-binarized neural network circuit 30 (see FIG. 4) is high in error rates (classification errors) (approximately 80%) and poor in the recognition accuracy. Additionally, even when learning is continued, improvement of the error rate is not observed (the learning does not converge).

By contrast, it has been confirmed that the binarized neural network circuit 100 according to this embodiment shown as "with batch normalization" in FIG. 11B has an error converged at an approximately 6% (using VGG - 16), compared to the multibit-constituted neural network circuit 20. This applies, however, to a case where the numbers of neurons are the same, and, with increase in the numbers of neurons, a difference therebetween becomes reduced. It is also confirmed that, similarly to the multibit-constituted neural network circuit 20, learning converges in the binarized neural network circuit 100 according to this embodiment as the learning is continued.

In this embodiment, the batch normalization circuit 41 (see FIG. 6) is not necessary, which is indispensable in the binarized neural network circuit 40 (see FIG. 6), and relevant parameters are also not necessary. This makes it possible to reduce area and memory size. Further, as will be understood by comparing "with batch normalization" in FIG. 11A and "without batch normalization" in FIG. 11B, the recognition accuracy of the binarized neural network circuit 100 according to this embodiment is different from that of the multibit-constituted neural network circuit 20 (see FIG. 2) by only several percentage point.

FIG. 12 is a table showing results of the binarized neural network circuit 100 according to this embodiment when mounted in FPGA (NetFPGA-1G-CML, manufactured by Digilent Inc.) in comparison with an existing multibit mounting technique.

The table of FIG. 12 shows comparative results of various items when respective neural networks according to the conference presenters [1] to [4] (for each paper published year) denoted in the margin below the table, and the neural network according to this embodiment are realized in FPGA. The items in comparison include: "Platform"; "Clock (MHz)" (an internal clock for synchronization); "Bandwidth (GB/s)" (a bandwidth for data transfer / a transfer rate when a memory is externally provided); "Quantization Strategy" (quantization bit rate); "Power (W)" (power consumption); "Performance (GOP/s)" (performance with respect to chip area); "Resource Efficiency (GOP/s/Slices)"; and "Power Efficiency (GOP/s/W)" (performance power efficiency). In the table, the items to be specifically focused on are described below.

<Power consumption>

Compared with the conventional examples in the table, it is demonstrated that the binarized neural network circuit 100 according to this embodiment is well-balanced with respect to power. In the conventional examples, as shown in "Power (W)", power consumption is large. The large power consumption makes a control method for its reduction complicated.

As shown in "Power (W)", this embodiment can reduce the power consumption to half to one third, compared with those of the conventional examples.

<Chip area>

In the binarized neural network circuit 100 according to this embodiment: there is no batch normalization circuit, which eliminates need for a memory; a multiplier circuit is a binarized logic gate; and an activating function is simple (the activation circuit 120 is not an activating function circuit but simulates the activating function circuit). Thus, as shown in "Performance (GOP/s)" of the table, performance with respect to chip area is about 30 times those of the conventional examples. That is, the binarized neural network circuit 100 according to this embodiment has advantageous effects such that: the chip area is reduced; an externally-provided memory becomes unnecessary; a memory controller and an activating function become simple; and the like. Since the chip area is proportionate to a price, a decrease in the price by about two digits can be expected.

<Performance equivalence>

The binarized neural network circuit 100 according to this embodiment is, as shown in "Bandwidth (GB/s)" in the table, substantially equivalent to those in the conventional examples. The performance power efficiency thereof is, as shown in "Power (W)" in the table, about twice as high even not with respect to the area but the power efficiency alone. Further, as shown in "Power Efficiency (GOP/s/W)" in the table, processing capacity per wattage unit (wattage of board as a whole) is also about twice as high.

[Examples of Mounting]

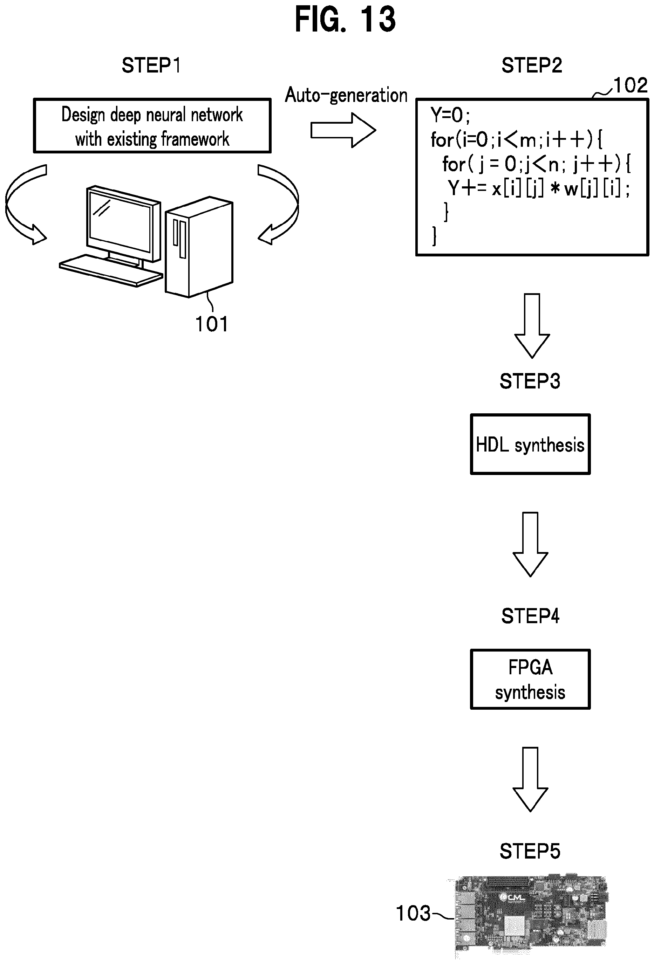

FIG. 13 is a diagram explaining an example of mounting a binarized neural network circuit according to the embodiment of the present invention.

<STEP1>

Given dataset (ImageNet which is data for image recognition task is used herein) is trained on a computer having a CPU (Central Processing Unit) 101, using Chainer (registered trademark) which is existing framework software for deep neural network. The computer includes: the CPU 101 such as an ARM processor; a memory; a storage unit (a storage part) such as a hard disk; and an I/O port including a network interface. The CPU 101 of the computer executes a program loaded in the memory (a program of executing a binarized neural network), to thereby make a control part (a control unit) composed of processing units to be described below operate.

<STEP2>

A C++ code equivalent to the binarized neural network circuit 100 according to this embodiment is automatically generated by using an auto-generation tool, to thereby obtain a C++ code 102.

<STEP3>

HDL (hardware description language) is generated for synthesizing FPGA (field-programmable gate array), using a higher order synthesis tool of a FPGA vendor (SDSoC manufactured by Xilinx, Inc.) (registered trademark).

<STEP4>

The binarized neural network circuit 100 is realized in FPGA, and image recognition is verified using a conventional FPGA synthesis tool, Vivado (registered trademark).

<STEP5>

After verification, a board 103 is completed. The binarized neural network circuit 100 is converted into hardware and is mounted on the board 103.

As described above, the binarized neural network circuit 100 according to this embodiment (see FIG. 9) includes: the input part 101 configured to allow input of an input node which allows input of input values x1-xn (xi) (binary), and weights w1-wn (wi) (binary); the XNOR gate circuit 102 configured to receive the input values x1-xn and the weights w1-wn and take XNOR logic; the multibit bias W' input part 110 configured to allow input of a multibit bias W' (see Formula (3)); the sum circuit 103 configured to take a total sum of each of XNOR logical values and the multibit bias W'; and the activation circuit 120 configured to output only a sign bit of a signal Y generated by using the sum.

The structure described above makes the batch normalization circuit itself unnecessary, and relevant parameters also become unnecessary. This makes it possible to reduce area and memory size. Additionally, even though there is no batch normalization circuit provided in this embodiment, a circuit structure therein is equivalent to that of the binarized neural network circuit 40 (see FIG. 6) including the batch normalization circuit 41 in terms of performance. As described above, in this embodiment, a memory area and a memory bandwidth in which an area and a parameter of a batch normalization circuit is stored respectively, can be saved. And, at the same time, the equivalent circuit structure can be realized in terms of performance. For example, as shown in the table of FIG. 12, the binarized neural network circuit 100 according to this embodiment can reduce the power consumption by half, and the area to about one thirtieth.

In this embodiment, it has been shown that a CNN substantially equivalent in recognition accuracy can be structured, while at the same time, the area can be reduced to about one thirtieth, compared to a binarized neural network circuit having an existing batch normalization circuit. The network circuit 100 is expected to be put to practical use as an edge assembly apparatus hardware system for ADAS (Advanced Driver Assistance System) camera image recognition using deep learning. The ADAS particularly requires high reliability and low heat generation for automobile use. In the binarized neural network circuit 100 according to this embodiment, power consumption is significantly reduced, as shown in the table of FIG. 12, and, in addition, an external memory is not necessary. This eliminates need for a cooling fan or a cooling fin for cooling such a memory, thus allowing the binarized neural network circuit 100 to be suitably mounted on an ADAS camera.

[Variation]

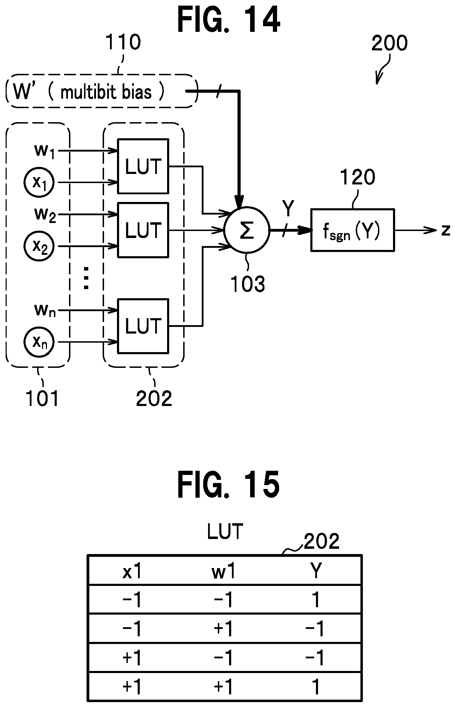

FIG. 14 is a diagram illustrating a structure of a binarized neural network circuit in a deep neural network according to a variation. In FIG. 14, same reference numerals are given to components same as those in FIG. 9.

This variation is an example in which, in place of a logic gate as a multiplier circuit, a LUT (Look-Up Table) is used.

A binarized neural network circuit 200 can be applied to the neural network circuit 2 of FIG. 1.

As illustrated in FIG. 14, the binarized neural network circuit 200 (a neural network circuit device) includes: the input part 101 configured to allow input of input nodes x1-xn which allows input of input values x1-xn (xi) (binary), and weights w1-wn (binary); a LUT 202 (a logic circuit part) configured to receive the input values x1-xn and the weights w1-wn, and store therein a table value for performing multiplication of a binary value (-1/+1) to be referenced in computing; the multibit bias W' input part 110 configured to allow input of a multibit bias W' (see Formula (3)); the sum circuit 103 configured to take a total sum of each of the table values referenced from the LUT 202 and the multibit bias W'; and the activation circuit 120 configured to simulate an activating function circuit which outputs only a sign bit of a signal Y generated by using the sum.

This variation is the example in which, in place of a logic gate as a multiplier circuit, the LUT (Look-Up Table) 202 is used as described above.

The LUT 202 uses, in place of the XNOR gate circuit 102 (see FIG. 9) which performs XNOR logic, a look-up table which is a basic constituent of FPGA.

FIG. 15 is a diagram illustrating a structure of the LUT 202 in the binarized neural network circuit 200 according to the variation.

As illustrated in FIG. 15, the LUT 202 stores therein the binary (-1/+1) XNOR logical result Y in response to 2-input (x1, w1).

As described above, the binarized neural network circuit 200 according to the variation has a structure in which the XNOR gate circuit 102 of FIG. 9 is replaced by the LUT 202. In the variation, similarly to the embodiment, a memory area and a memory bandwidth in which an area and a parameter of a batch normalization circuit is stored respectively, can be saved. And, at the same time, the equivalent circuit structure can be realized in terms of performance.

In this variation, the LUT 202 is used as a logic gate which performs XNOR computation. The LUT 202: is a basic constituent of FPGA; has a high compatibility with FPGA synthesis; and is easy to be mounted using FPGA.

The present invention is not limited to the above-described embodiments, and other variations and modifications are possible within a scope not departing from the gist of the present invention described in claims.

The above-detailed embodiments are intended to be illustrative of the present invention in an easily understandable manner and the present invention is not limited to the one that includes all of the components explained in the embodiments. Part of a structure of an embodiment can be substituted by or added to that of another embodiment. An exemplary embodiment can be carried out in other various embodiments, and various omissions, substitutions, and changes are possible within a scope not departing from the gist of the present invention. Those embodiments and variations are included in claims or abstract and are also included in the inventions described in claims as well as within a range equivalent to those claims.

Among each of the processings explained in the embodiment, all or part of the processing explained as being performed automatically can be performed manually instead. Or, all or part of the processing explained as being performed manually can be performed automatically by a known method. Information including a processing procedure, a control procedure, a specific name, and various types of data and parameters shown in the specification or in the drawings can be optionally changed, unless otherwise specified.

The constituent elements of the devices illustrated in the drawings are functionally conceptual and are not necessarily structured as physically illustrated. That is, a specific configuration of distribution and integration of the devices is not limited to those as illustrated, and all or part thereof can be structured by functionally or physically distributing or integrating in any appropriate unit, depending on various types of load and status of usage.

Part or all of a configuration, a function, a processing part, a processing unit, or the like can be realized by hardware by means of, for example, designing of integrated circuits. The above-described configuration, function, or the like can be embodied by software in which a processor interprets and executes a program which realizes the function. Information such as a program, a table, a file, and the like for realizing such a function can be stored in a storage device including a memory, a hard disk, and a SSD (Solid State Drive) or in a storage medium including an IC (Integrated Circuit) card, a SD (Secure Digital) card, and an optical disc.

In the above-described embodiments, the device is named as a neural network circuit device. The name is, however, used for purpose of illustration and may be a deep neural network circuit, a neural network device, a perceptron, or the like. In the above-described embodiments, the method and the program are named as the neural network processing method. The name may be instead a neural network computing method, a neural net program, or the like.

DESCRIPTION OF REFERENCE NUMERALS

| 1 | deep neural network |
| 2 | neural network circuit |
| 11 | input layer |
| 12 | hidden layer (intermediate layer) |
| 13 | output layer |
| 100, 200 | binarized neural network circuit (neural network circuit device) |
| 101 | input part |
| 102 | XNOR gate circuit (logic circuit part, logic circuit unit) |
| 103 | sum circuit (sum circuit part, sum circuit unit) |
| 110 | multibit bias input part |
| 120 | activation circuit (activation circuit part, activation circuit unit) |
| 202 | LUT (logic circuit part) |
| x1-xn (xi) | input value (binary) |
| w1-wn (wi) | weight (binary) |
| W' | multibit bias |

**Claims**

1. A neural network circuit device which is provided in a neural network including at least an input layer, one or more intermediate layers, and an output layer, and in which an input value is multiplied by a weight and a bias in the intermediate layer, the neural network circuit device comprising:

   a logic circuit part configured to receive an input value xi and a weight wi and perform a logical operation;
   a sum circuit part configured to receive a multibit bias W' and sum an output from the logic circuit part and the multibit bias W'; and
   an activation circuit part configured to output only a sign bit of a multibit signal Y generated by using the sum.

2. The neural network circuit device according to claim 1, further comprising:

   an input part configured to allow input of the input value xi and the weight wi; and
   a multibit bias input part configured to allow input of the multibit bias W'.

3. The neural network circuit device according to claim 1 or claim 2,
   wherein both the input value xi and the weight wi are binary signals.

4. The neural network circuit device according to claim 1 or claim 2,
   wherein the multibit bias W' is a multibit bias value which has already been subjected to learning.

5. The neural network circuit device according to claim 1,
   wherein the logic circuit part includes exclusive NOR or exclusive OR.

6. The neural network circuit device according to claim 1,
   wherein the logic circuit part is a LUT (Look-Up Table).

7. The neural network circuit device according to claim 1,
   wherein the sign bit is a binary signal indicating either that the summed multibit signal Y is activated or not.

8. The neural network circuit device according to claim 1,
   wherein the multibit signal Y and the multibit bias W' are represented by the following formula:

$$Y = \sum_{i=1}^{n} w_i x_i + W' \cdot$$

9. A neural network including the neural network circuit device according to any one of claims 1 to 8.

10. A neural network processing method which is provided in a neural network including at least an input layer, one or more intermediate layers, and an output layer, and in which an input value is multiplied by a weight and a bias in the intermediate layer, the neural network processing method comprising the steps of:

   receiving an input value xi and a weight wi and performing a logical operation;
   receiving a multibit bias W' and summing an output from the logic circuit part and the multibit bias W'; and
   outputting only a sign bit of a multibit signal Y generated by using the sum.

11. A neural network execution program embodied on a non-transitory computer-readable medium, the program for causing a computer serving as a neural network circuit device which is provided in a neural network including at least an input layer, one or more intermediate layers, and an output layer, and in which an input value is multiplied by a weight and a bias in the intermediate layer,
   wherein the neural network circuit device comprises:

   a logic circuit unit configured to receive an input value xi and a weight wi and perform a logical operation;
   a sum circuit unit configured to receive a multibit bias W' and sum an output from the logic circuit part and the multibit bias W'; and
   an activation circuit unit configured to output only a sign bit of a multibit signal Y generated by using the sum.

# FIG. 1

EP 3 564 865 A1

# FIG. 2

20

W₀ ( bias )

W₁
Ⓧ₁

×

W₂
Ⓧ₂

×

⋮

Wₙ
Ⓧₙ

×

Σ

Y

24

f_act (Y)

Z

23

21          22

# FIG. 3

f_act (Y)

+1

0

Y

-1

# FIG. 4

# FIG. 5

# FIG. 6

# FIG. 7

# FIG. 8

# FIG. 9

# FIG. 10

# FIG. 11A

# FIG. 11B

# FIG. 12

| Year | 2010 [1] | 2014 [2] | 2015 [3] | 2016 [4] | Proposed Technique |
|---|---|---|---|---|---|
| Platform | Virtex 5 SX240t | Zynq XC7Z045 | Virtex7 VX485t | Zynq XC7Z045 | Kintex7 325t |
| Clock(MHz) | 120 | 150 | 100 | 150 | 450 |
| Bandwidth(GB/s) | --- | 4.2 | 12.8 | 4.2 | 3.6 |
| Quantization Strategy | 48-bit fixed | 16-bit fixed | 32-bit float | 16-bit fixed | binary (1bit) |
| Power(W) | 14 | 8 | 18.61 | 9.63 | 4.48 |
| Performance (GOP/s) | 16 | 23.18 | 61.62 | 187.80 | 176.8 |
| Resource Efficiency (GOP/s/Slices) | $4.30 \times 10^{-4}$ | --- | $8.12 \times 10^{-4}$ | $35.8 \times 10^{-4}$ | $1389.9 \times 10^{-4}$ |
| Power Efficiency (GOP/s/W) | 1.14 | 2.90 | 3.31 | 19.50 | 39.46 |

[1] S.Chakradhar et.al, "A dynamically configurable coprocessor for convolutional neural networks," in ISCA.
[2] V.Gokhale et.al, "A 240 g-ops/s mobile coprocessor for deep neural networks," in CVPRW.
[3] C. Zhang et.al, "Optimizing fpga-based accelerator design for deep convolutional neural networks," in FPGA.
[4] J. Qiu et. al, "Going deeper with embedded FPGA platform for convolutional neural network," in FPGA.

# FIG. 13

STEP1

Design deep neural network
with existing framework

101

Auto-generation

STEP2

102

```
Y=0;
for(i=0;i<m;i++){
  for( j = 0;j<n; j++){
   Y+= x[i][j] * w[j][i];
  }
}
```

STEP3

HDL synthesis

STEP4

FPGA
synthesis

STEP5

103

## FIG. 14

110

200

W' ( multibit bias )

w₁
(x₁) LUT

w₂
(x₂) LUT

⋮

wₙ
(xₙ) LUT

101

202

Σ

103

Y

120

f_sgn (Y)

z

## FIG. 15

LUT

202

| x1 | w1 | Y |
|----|----|----|
| −1 | −1 | 1 |
| −1 | +1 | −1 |
| +1 | −1 | −1 |
| +1 | +1 | 1 |

## INTERNATIONAL SEARCH REPORT

| International application No. |
| --- |
| PCT/JP2017/042670 |

**A. CLASSIFICATION OF SUBJECT MATTER**
Int. Cl. G06N3/063(2006.01)i

According to International Patent Classification (IPC) or to both national classification and IPC

**B. FIELDS SEARCHED**

Minimum documentation searched (classification system followed by classification symbols)
Int. Cl. G06N3/02, G06N3/06-3/063

Documentation searched other than minimum documentation to the extent that such documents are included in the fields searched
Published examined utility model applications of Japan    1922-1996
Published unexamined utility model applications of Japan  1971-2018
Registered utility model specifications of Japan          1996-2018
Published registered utility model applications of Japan  1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | 中原啓貴 ほか, メモリベースに基づく 2 値化深層畳込みニューラルネットワークの実現電子情報通信学会技術研究報告, 29 August 2016, vol. 116, no. 210, pp. 63-68, ISSN: 0913-5685, in particular, p. 65, right column to p. 66, left column, "3.1 BinaryNet", and fig. 5 (NAKAHARA, Hiroki et al. A Memory Based Realization of the Binarized Deep Convolutional Neural Network. IEICE Tech. Rep.) | 1-3, 5, 7-11<br>4, 6 |

☒ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| | |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

# EP 3 564 865 A1

**INTERNATIONAL SEARCH REPORT**

International application No.

PCT/JP2017/042670

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2016-033806 A (RICOH CO., LTD.) 10 March 2016, paragraphs [0030]-[0038] & US 2015/0332126 A1, paragraphs [0075]-[0083] & EP 2945102 A1, paragraphs [0030]-[0038] | 4 |
| Y | JP 2006-033579 A (TOSHIBA CORP.) 02 February 2006, paragraph [0019] & US 2006/0017459 A1, paragraph [0044] & CN 1725642 A | 6 |

Form PCT/ISA/210 (continuation of second sheet) (January 2015)

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016173843 A

### Non-patent literature cited in the description

- **M. COURBARIAUX ; I. HUBARA ; D. SOUDRY ; R.E.YANIV ; Y. BENGIO.** Binarized neural networks: Training deep neural networks with weights and activations constrained to +1 or -1. *Computer Research Repository (CoRR), "Binary Neural Network Algorithm,* March 2016, http:// arxiv.org/pdf/1602.02830v3.pdf
- **MOHAMMAD RASTEGARI ; VICENTE ORDONEZ ; JOSEPH REDMON ; ALI FARHADI.** XNOR-Net: ImageNet Classification Using Binary Convolutional Neural Networks. *Computer Vision and Pattern recognition, "Binary Neural Network Algorithm,* March 2016, https://arxiv.org/pdf/1603.05279v4
- **HIROKI NAKAHARA ; HARUYOSHI YONEKAWA ; TSUTOMU SASAO ; HISASHI IWAMOTO ; MASA-TO MOTOMURA.** A Memory-Based Realization of a Binarized Deep Convolutional Neural Network. *Proc. of the 2016 International Conference on Field-Programmable Technology (FPT),* December 2016
- **ERIKO NURVITADHI ; DAVID SHEFFIELD ; JAE-WOONG SIM ; ASIT MISHRA ; GANESH VENKATESH ; DEBBIE MARR.** Accelerating Binarized Neural Networks: Comparison of FPGA, CPU, GPU, and ASIC. *Proc. of the 2016 International Conference on Field-Programmable Technology (FPT),* December 2016